# FASCICULE DE BREVET EUROPEEN

(11) **EP 0 567 604 B1**
(45) Date de publication et mention de la délivrance du brevet: **24.07.1996**
(21) Numéro de dépôt: 92914428.5
(22) Date de dépôt: 29.06.1992
(51) Int. Cl.: B31F 5/02, B41M 1/24

(54) **Procédé d'impression gaufrage de feuilles de papier**
Verfahren zum Prägen und Bedrucken von Papierblättern
Method for embossing and printing sheets of paper

(30) Priorité: 28.06.1991 FR 9108029
(43) Date de publication de la demande: 03.11.1993
(73) Titulaire: KAYSERSBERG, F-68240 Kaysersberg (FR)
(72) Inventeur: RUPPEL, Rémy, F-68320 Durrenentzen (FR); HUNGLER, Joel, F-68320 Urschenheim (FR); LAURENT, Pierre, F-68000 Colmar (FR)
(74) Mandataire: David, Daniel
(86) Numéro de dépôt international: FR9200605
(87) Numéro de publication internationale: WO9300219

(56) Documents cités:
- FR-A- 794 424
- FR-A- 2 557 834
- FR-A- 2 602 999
- GB-A- 598 442

## Description

La présente invention concerne un procédé d'impression gaufrage pour feuilles de papier en ouate de cellulose (papier tissue) comportant deux plis ou plus.

Les produits en ouate de cellulose comportant deux plis ou d'avantage sont utilisés notamment comme papier hygiénique ou essuie-tout.

La technique classique d'impression des produits en ouate de cellulose à deux plis du type pointe-pointe consiste en une impression du produit sur la face externe au moyen d'un groupe d'impression situé en amont ou en aval d'un groupe de gaufrage.

L'inconvénient majeur d'une telle technique illustrée, par exemple par l'US-A-3414459, est que l'encre d'impression se trouve sur la face externe du produit, donc en contact avec l'extérieur à l'usage. En outre, il est impossible de synchroniser le gaufrage et l'impression. Enfin, l'impression avant gaufrage interagit avec celui-ci, il s'ensuit une définition dégradée.

L'impression gaufrage des produits en ouate de cellulose à deux plis du type "nested" est effectuée de façon classique en utilisant le groupe encolleur du groupe gaufrage et en teintant la colle.

Cette technique, illustrée par exemple par l'US-A-3867225, conduit à des produits n'ayant pas d'encre d'impression sur les faces externes mais présente encore de nombreux inconvénients, notamment l'asservissement du motif d'impression au motif de gaufrage (il ne peut donc être changé facilement), la dépendance de la densité d'impression par rapport au collage, des investissements élevés. En outre, il est nécessaire d'utiliser une encre miscible avec la colle ce qui limite le choix des encres.

Enfin, il n'est pas possible d'utiliser toutes les finesses d'une impression classique comme les trames ou les dégradés.

La présente invention pallie les inconvénients ci-dessus et fournit un procédé d'impression gaufrage selon la revendication unique.

Le procédé de l'invention peut être appliqué aussi bien pour l'obtention de gaufrages pointe-pointe que le gaufrage "nested".

L'invention sera à présent décrite en référence aux Figures annexées, données uniquement à titre d'exemples, dans lesquelles :
la Figure 1 est une vue schématique d'un dispositif pour la mise en oeuvre d'un procédé d'impression gaufrage du type pointe-pointe selon l'invention ;
la Figure 2 est une vue schématique d'un dispositif pour la mise en oeuvre d'un procédé d'impression gaufrage du type "nested" selon l'invention.

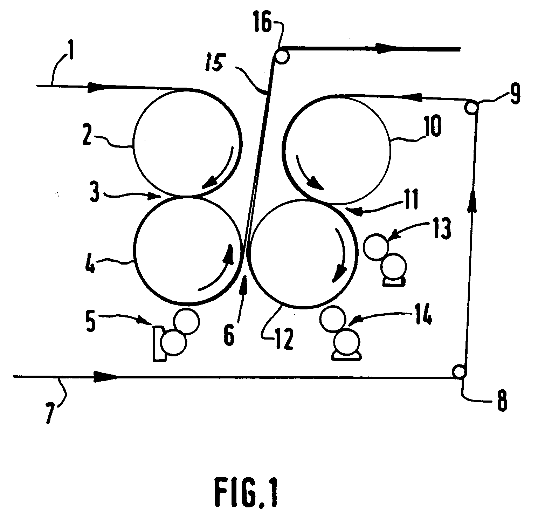

En se référant à la Figure 1, un pli de tissue 1 se déplace dans le sens indiqué par la flèche, en passant autour d'un cylindre de pression en caoutchouc 2, dans l'intervalle de pincement 3 formé par le cylindre de pression en caoutchouc 2 et le cylindre de gaufrage en acier 4. Le pli de tissue 1 gaufré dans l'intervalle de pincement 3, passant autour du cylindre en acier 4, est encollé sur le groupe d'encollage 5 et avance vers l'intervalle de pincement 6.

Un second pli de tissue 7 se déplace dans le sens indiqué par la flèche en passant, via des cylindres de guidage 8 et 9, autour du cylindre de pression en caoutchouc 10, dans l'intervalle de pincement 11 entre le cylindre de pression en caoutchouc 10 et le cylindre de gaufrage en acier 12. Le pli de tissue 1 gaufré dans l'intervalle de pincement 11 passe autour du cylindre de gaufrage 12 et est imprimé, sur le cylindre de gaufrage 12, dans les groupes d'impression 13 et 14. Le pli de tissue 7 gaufré et imprimé avance vers l'intervalle de pincement 6 où il est combiné selon une combinaison pointe-pointe au pli de tissue 1 gaufré et encollé pour former la feuille 15.

La feuille 15 est envoyée, via le cylindre de guidage 16, à un stade de transformation successive classique.

Les pigments d'impression de la feuille 15 se trouvent sur la face interne entre les plis 1 et 7.

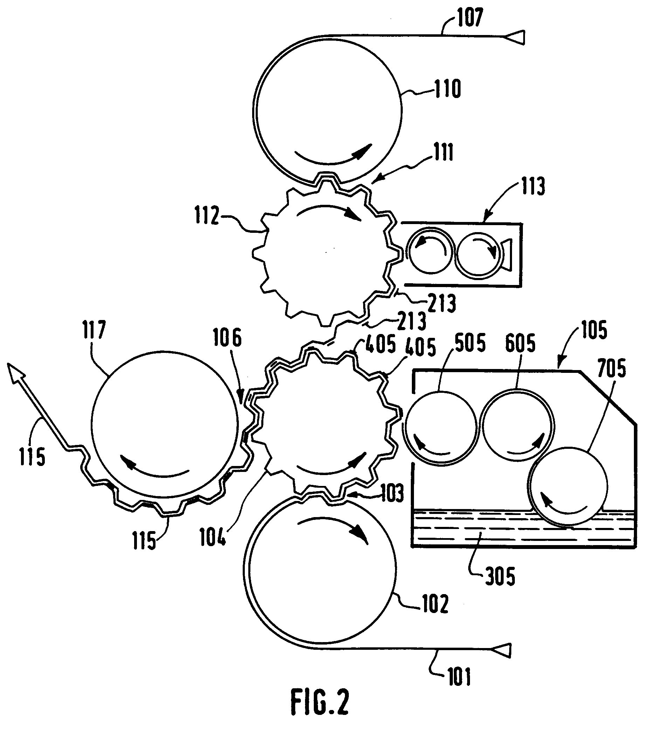

En se référant à la Figure 2, un pli de tissue 101 se déplace dans le sens indiqué par la flèche, en passant autour d'un cylindre de pression en caoutchouc 102, dans l'intervalle de pincement 103 formé entre le cylindre de pression 102 et le cylindre de gaufrage en acier 104. Le pli de tissue 101 gaufré dans l'intervalle de pincement 103, passant autour du cylindre de gaufrage 104, est encollé selon 405 sur le groupe d'encollage 105. Le groupe d'encollage 105 pour l'application de l'adhésif 305 comprend un rouleau de transfert 505, un rouleau docteur 605 et un rouleau récepteur 705 tournant dans le sens indiqué par les flèches.

Un second pli de tissue 107 se déplace dans le sens indiqué par la flèche en passant autour du cylindre de pression en caoutchouc 110 dans l'intervalle de pincement 111, entre le cylindre de pression 110 et le cylindre de gaufrage en acier 112, où il est gaufré.

L'impression du pli de tissue 107 gaufré passant autour du cylindre de gaufrage 112 est effectuée sur le cylindre de gaufrage 112 dans l'unité d'impression 113 selon 213. Le pli de tissue 107 gaufré et imprimé est amené sur le cylindre de gaufrage 104 où il est combiné dans l'intervalle de pincement 106 entre le cylindre de gaufrage 104 et le cylindre de pression 117 au pli de tissue 101 gaufré et encollé, selon une combinaison "nested", pour former la feuille 115.

Les pigments d'impression 405 se trouvent sur la partie interne de la feuille 115 entre les plis 101 et 107.

La feuille 115 passe autour du cylindre de pression 117 et est envoyée à un stade de transformation ultérieur classique.

Les avantages du procédé de l'invention sont les suivants :
- dépose des pigments d'impression sur la face interne de la feuille entre les deux ou plusieurs plis, donc aucun contact des pigments avec l'extérieur à l'usage ;
- synchronisation entre le motif d'impression et le motif de gaufrage, ce qui permet par exemple de souligner un motif de gaufrage ;
- investissement réduit du fait des exigences moindres d'espace sur la machine.

En ce qui concerne l'impression pour un gaufrage du type "nested", le procédé de l'invention conduit à une meilleure indépendance du motif d'impression par rapport au motif de gaufrage et à une indépendance de l'impression par rapport au collage conduisant à la possibilité de faire varier l'intensité d'impression du produit.

## Revendications

1. Procédé d'impression-gaufrage de feuilles de papier en ouate de cellulose à deux plis ou davantage selon lequel l'impression d'un des plis (7; 107) est effectuée directement sur le cylindre de gaufrage (12; 112), au moyen d'un ou plusieurs groupes d'impression (13, 14; 113) installés sur les unités de gaufrage, et ce pli est associé à un autre pli (1; 101) gaufré et encollé pour former une feuille (15; 115) de telle sorte que les pigments d'impression se trouvent sur la face interne de la feuille entre les deux ou plusieurs plis.

## Claims

1. Method of embossing and printing sheets of paper made of cellulose wadding in two or more plies in which printing of one of the plies (7; 107) is carried out directly on the embossing cylinder (12; 112) by means of one or more printing units (13, 14; 113) installed on the embossing units, and this ply is combined with another embossed and glued ply (1; 101) to form a sheet (15; 115) in such a way that the printing pigments are located on the internal surface of the sheet between the two or more plies.

## Patentansprüche

1. Verfahren zum Prägedrucken von Papierblättern aus Zellstoffwatte mit zwei Lagen oder mehr, nach dem das Bedrucken einer der Lagen (7; 107) direkt auf dem Prägezylinder (12; 112) bewirkt wird, mittels eines oder mehrerer Druckwerke (13, 14; 113), die auf den Prägeeinheiten installiert sind, und diese Lage mit einer anderen geprägten Lage (1; 101) verbunden und verleimt wird, um ein Blatt (15; 115) so zu formen, daß sich die Druckpigmente auf der inneren Fläche des Blattes zwischen den beiden oder mehreren Lagen befinden.
